(19) Europäisches Patentamt
European Patent Office
Office européen des brevets

(11) Veröffentlichungsnummer: **0 013 397**
**B1**

(12) # EUROPÄISCHE PATENTSCHRIFT

(45) Veröffentlichungstag der Patentschrift: **27.06.84**

(51) Int. Cl.³: **C 08 G 63/68**

(21) Anmeldenummer: **79105285.5**

(22) Anmeldetag: **20.12.79**

(54) **Verfahren zur Herstellung von ungesättigten, imidgruppen enthaltenden Polyestern und ihre Verwendung.**

(30) Priorität: **23.12.78 DE 2856050**

(43) Veröffentlichungstag der Anmeldung:
**23.07.80 Patentblatt 80/15**

(45) Bekanntmachung des Hinweises auf die Patenterteilung:
**27.06.84 Patentblatt 84/26**

(84) Benannte Vertragsstaaten:
**AT BE CH FR GB IT LU NL SE**

(56) Entgegenhaltungen:
**DE - A - 1 495 113**
**FR - A - 1 547 106**
**FR - A - 2 295 051**

**Journal of Paint Technology, 39 (506), pages 144-151 (1967)**

**Die Akte enthält technische Angaben, die nach dem Eingang der Anmeldung eingereicht wurden und die nicht in dieser Patentschrift enthalten sind.**

(73) Patentinhaber: **Herberts Gesellschaft mit beschränkter Haftung, Christbusch 25, D-5600 Wuppertal 2 (DE)**

(72) Erfinder: **Bederke, Klaus, Dr., Oststrasse 36, D-4322 Sprockhövel 2 (DE)**
Erfinder: **Kerber, Hermann, Worringer-Strasse 77, D-5600 Wuppertal 1 (DE)**

(74) Vertreter: **Türk, Dietmar, Dr. rer. nat. et al, Redies, Redies, Türk & Gille Patentanwälte Brucknerstrasse 20, D-4000 Düsseldorf 13 (DE)**

**EP 0 013 397 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von ungesättigten, Imidgruppen enthaltenden Polyestern durch Umsetzung von Imidgruppen enthaltenden Verbindungen mit ungesättigten, gegebenenfalls zusätzlich mit gesättigten mehrwertigen Carbonsäuren oder deren Anhydriden, und Hydroxylgruppen enthaltenden Verbindungen.

Verbindungen dieser Art besitzen ungesättigte Gruppen, aufgrund deren sie zur Polymerisation mit monomeren Vinyl-, Acryloyl-, Methacryloyl- und/oder Allyl-Verbindungen geeignet sind. Sie werden deshalb zur Herstellung von Mischpolymerisaten derartiger monomerer Verbindungen verwendet. Diese Mischpolymerisate besitzen technische Bedeutung als Isolierharze bzw. -lacke auf dem Elektro-Sektor. Die Isolierung erfolgt derart, daß die ungesättigten Imidgruppen enthaltenden Polyesterharze mit den monomeren Verbindungen in Form von Tränk-, Träufel- oder ähnlichen Harzen eingesetzt, diese Gemische auf die zu isolierenden Gegenstände aufgebracht und dann gehärtet werden (vgl. DE-OS 1 770 386 und DE-AS 1 570 273).

Die auf diese Weise erhaltenen Isolierungen des Stands der Technik besitzen zwar gute elektrische Werte, lassen aber hinsichtlich der Elastizität zu wünschen übrig. Die mangelnde Elastizität wirkt sich besonders nachteilig aus auf Umhüllungen der Zuleitungen zu Dratspulen, die in der Tränk- oder Träufelisolierung eingebettet sind. Wenn bei der späteren Verwendung der Spulen diese Zuleitungen häufig hin und her gebogen werden, brechen sie bei ungenügender Elastizität der Tränk- bzw. Träufelisolierungen diese stückweise heraus. Wenn man versucht, die bekannten Produkte dahingehend zu modifizieren, daß man aliphatische Gruppen mit verhältnismäßig großen Kettenlängen einbaut, um auf diese Weise eine erhöhte Elastizität zu erhalten, stellt man fest, daß die Gewichtsverluste bei Temperaturbelastung in unerwünschter Weise zunehmen. Der vorliegenden Erfindung liegt die Aufgabenstellung zugrunde, Isolierungen zu erhalten, die in der Elastizität den bekannten Produkten überlegen sind, jedoch diesen gegenüber in ihren sonstigen, für diesen Verwendungszweck gewünschten Eigenschaften zumindest nicht nachstehen.

Es wurde überraschenderweise gefunden, daß diese Aufgebenstellung in weitgehender Weise dadurch gelöst werden kann, daß in die ungesättigten Polyester ungesättigte Öle chemisch eingebaut werden. An sich hätte man aufgrund der oben dargelegten Ergebnisse erwarten müssen, daß bei derartig modifizierten Polyestern die Gewichtsverluste bei Temperaturbelastung erheblich zunehmen, weil Öle bei höheren Temperaturen auch dann, wenn diese in Polymerisate eingebaut sind, zur Zersetzung neigen und damit einen Gewichtsverlust begünstigen. Es ist überraschend, daß dieser Effekt bei den Polyestern gemäß der Erfindung bzw. den daraus hergestellten Mischpolymerisaten mit monomeren ungesättigten Verbindungen nicht oder praktisch nicht eintritt, während andererseits die Elastizität der Endprodukte beträchtlich erhöht wird.

Gegenstand der vorliegenden Erfindung ist demgemäß das im Anspruch 1 definierte Verfahren zur Herstellung der Polyester.

Weiterhin sind Gegenstand der Erfindung die nach diesem Verfahren erhaltenen Polyester und deren Verwendung zur Herstellung von Mischpolymerisaten durch Polymerisation mit monomeren Vinyl-, Acryloyl-, Methacryloyl- und/oder Allyl-Verbindungen.

Bei den imidgruppenhaltigen Ausgangsprodukten der Formel I handelt es sich um solche, wie sie nach dem Stand der Technik zur Herstellung von ungesättigten, Imidgruppen enthaltenden Polyestern eingesetzt wurden (DE-PS 1 770 386 und DE-PS 1 570 273). Sie werden in der Regel hergestellt durch Umsetzung von Aminoalkoholen oder Aminocarbonsäuren mit Dicarbonsäuren oder deren Anhydriden, wobei die beiden Carboxylgruppen in Orthostellung zueinander stehen, so daß sich fünfgliedrige Imidringe bilden können. Die Herstellung dieser Verbindungen der Formel I kann in situ erfolgen, wie dies auch nach dem Stand der Technik bekannt ist. Diese Art der Herstellung, d. h. die Umsetzung mit den sonstigen Ausgangskomponenten, ist im allgemeinen bevorzugt, da eine Isolierung der Verbindungen der Formel I nicht erforderlich ist und die Umsetzung in einem Arbeitsgang durchgeführt werden kann. Allgemein sind solche Verbindungen der Formel I bevorzugt, in denen R für einen monocyclischen oder bicyclischen Rest steht. Es sind solche Reste bevorzugt, die nur Kohlenstoffatome enthalten. Die Endomethylentetrahydrophthalsäure wird im Sinne dieser Definition als bicyclische Verbindung verstanden. Ein Beispiel für einen bicyclischen aromatischen Rest ist derjenige der Naphthalin-1,8-dicarbonsäure.

Die beiden Carboxylgruppen dieser Säure können mit einer Aminogruppe einen sechsgliedrigen Imidring bilden. Die Naphthalin-1,2-dicarbonsäure bildet mit Aminogruppen einen fünfgliedrigen Imidring. Beispiele für cycloaliphatische Reste sind die entsprechenden ganz oder teilweise hydrierten aromatischen Reste, wie sie vorstehend definiert wurden. Beispiele für aliphatische Reste sind solche mit 2 oder 3 Kohlenstoffatomen, d. h. Reste von Carbonsäuren, die mit Aminogruppen zur Bildung von Imidringen befähigt sind. Bernsteinsäure bzw. deren Anhydrid sind besonders bevorzugt wegen der leichten Zugänglichkeit und guten Reaktionsfähigkeit. Alle vorgenannten Verbindungen können an den Kohlenstoffatomen Methylgruppen und/oder Halogenatome als Substituenten tragen. Halogensubstituierte Verbindungen sind besonders dann bevorzugt, wenn flammhemmende Eigenschaften der Endprodukte gewünscht werden. Als Halogene kommen insbesondere Chlor und Brom in Frage.

Die Gruppe $R_1$ steht bevorzugt für aliphatische Reste mit 2 bis 5, besonders bevorzugt 2 oder 3

Kohlenstoffatomen. Wegen der leichten Zugänglichkeit wird Monoäthanolamin bevorzugt. Grundsätzlich können aber auch andere entsprechende Aminoverbindungen eingesetzt werden, insbesondere Aminoäthancarbonsäure sowie die entsprechenden 3 oder 4 $CH_2$-Gruppen enthaltenden Aminoalkohole oder Aminocarbonsäuren. Als Verbindung mit einer größeren Zahl Kohlenstoffatome kommt, insbesondere wegen der leichten Zugänglichkeit, $\varepsilon$-Aminocarbonsäure bzw. das Lactam dieser Säure Caprolactam, in Frage.

Obwohl von technischer Bedeutung als Dicarbonsäuren bzw. deren Anhydride praktisch nur Phthalsäure, Tetrahydrophthalsäure und Endomethylentetrahydrophthalsäure bzw. die entsprechenden teil- oder vollhalogenierten Verbindungen (mit flammhemmenden Eigenschaften) in Frage kommen, können zumindest teilweise auch andere analoge Dicarbonsäuren bzw. deren Anhydride eingesetzt werden.

Als ungesättigte aliphatische Dicarbonsäuren bzw. deren Anhydride kommen insbesondere aus Gründen der leichten Zugänglichkeit und der guten Reaktionsfähigkeit hauptsächlich Maleinsäure, Fumarsäure, Citraconsäure, Mesaconsäure und Itaconsäure und deren existierende Anhydride in Frage. Als gesättigte mehrwertige Carbonsäuren, die gegebenenfalls für den Aufbau des Polyesters mit verwendet werden können, kommen solche in Frage, wie sie oben im Zusammenhang mit den Verbindungen der Formel I genannt wurden. Diese können also zusätzlich, d. h. nicht nur über die Verbindungen der Formel I, in das Polyestermolekül einkondensiert sein.

Als Hydroxylgruppen enthaltende Verbindungen können ebenfalls grundsätzlich die nach dem Stand der Technik zur Herstellung von Polyestern verwendeten Verbindungen eingesetzt werden (vgl. die bereits obengenannten DE-OS 1 770 386 und DE-AS 1 570 273). Polyole sind bevorzugt solche mit 3 oder 4 Hydroxylgruppen, wie Glycerin, Trimethylolpropan, Trimethyloläthan, Pentaerythrit, Dipentaerythrit, Trishydroxyäthylisocyanurat. Die Polyester gemäß der Erfindung enthalten mindestens teilweise als hydroxylgruppenhaltige Verbindungen solche Polyole einkondensiert. Diese stellen dann gewissermaßen das Zentrum der einzelnen Polyestermoleküle dar. In den an diesem Zentrum anhängenden Ketten können auch Diole einkondensiert sein, insbesondere aliphatische Diole mit 2 bis 6 Kohlenstoffatomen, vorzugsweise Glycol, Neopentylglycol.

Die wesentliche Komponente der Polyester gemäß der Erfindung sind die chemisch eingebauten ungesättigten Öle. Eine Gruppe solcher Öle sind die natürlichen, hydroxyfunktionellen Öle, wie Ricinusöl. Es handelt sich hierbei bekanntlich um ein Triglycerid, d. h., das Glycerin kann auch im Sinne der obigen Darlegung als Zentrum des Polyestermoleküls gedacht werden. Über die Hydroxylgruppen dieser hydroxyfunktionellen Öle wird die Veresterung mit den anderen Ausgangskomponenten zur Herstellung der Polyester erreicht.

Wegen der leichten Zugänglichkeit werden grundsätzlich natürliche Öle bevorzugt. Es können aber auch als Öle die Reaktionsprodukte von Polyolen mit 3 bis 6 Hydroxylgruppen und isolierten Fettsäuren eingesetzt werden, wie sie in den natürlichen Ölen enthalten sind, bzw. analoge Fettsäuren enthaltende Gruppen, die zu Reaktionen mit den sonstigen Ausgangsprodukten für die Herstellung der Polyester befähigt sind.

Beispiele für isolierte Fettsäuren sind Linolsäure, Linolensäure, Gemische aller dieser Säuren können eingesetzt werden.

Besonders bevorzugt gemäß der Erfindung werden als Öle mit Polyolen umgeestert natürliche ungesättigte Öle eingesetzt. Bevorzugt ist eine teilweise Umesterung. Es wird also von den natürlichen Ölen ein Teil der Fettsäure abgespalten und durch andere Säuren ersetzt. Als derartige Säuren kommen grundsätzlich alle zum Aufbau von Polyestern geeignete Säuren in Frage, insbesondere solche, wie sie vorstehend genannt werden.

Die ungesättigten Öle werden in einer Menge von 5 bis 60 Gew.-%, vorzugsweise mindestens 20 Gew.-% und höchstens 50 Gew.-% eingesetzt. Die jeweilige Menge richtet sich nach dem Verwendungszweck und den gewünschten Eigenschaften der Endprodukte. Wie bereits eingangs ausgeführt, führt der Einbau der Öle zu einer erhöhten Elastizität. Die untere Grenze wird bestimmt durch das Ausmaß der Elastizität, die mindestens gewünscht wird, und die obere Grenze durch das Erfordernis, eine Weichheit oder Klebrigkeit der Endprodukte zu vermeiden.

Das Molekulargewicht der Polyester gemäß der Erfindung liegt zweckmäßig im Bereich von 1200 bis 5000. Die untere Grenze liegt vorzugsweise bei etwa 2000; die obere zweckmäßig bei etwa 4000.

Die Herstellung erfolgt in an sich bekannter Weise durch Erhitzen auf Temperaturen von 130° C bis 200° C. Die obere Grenze wird bestimmt durch das Vermeiden von Zersetzungsreaktionen, die untere Grenze durch eine genügende Umsetzung in angemessener Zeit. Die Umsetzung kann mit und ohne Zusatz von Schleppmitteln (z. B. Xylol) erfolgen, wie dies auch nach dem Stand der Technik üblich ist. Gegebenenfalls können übliche Veresterungskatalysatoren und/oder sonstige Zusatz- und Hilfsstoffe eingesetzt werden.

Die gemäß der Erfindung hergestellten ungesättigten, imidgruppenenthaltenden Polyester besitzen aufgrund ihres Aufbaues ein relativ niedriges mittleres Molekulargewicht und eine niedrige Eigenviskosität. Ihr günstiger sterischer Aufbau und die Lage der reaktiven Doppelbindungen gewährleisten große Reaktivität und Vernetzungsfreudigkeit mit polymerisierbaren Monomeren. Der Gehalt an Imidringen verleiht den Endprodukten eine außerordentliche hohe Temperaturbeständigkeit.

Die gemäß der Erfindung hergestellten Polyester werden vorzugsweise zur Herstellung von Mischpolymerisaten durch Polymerisation mit monomeren Vinyl-, Acryloyl-, Methacryloyl- und/ oder Allyl-Verbindungen verwendet. Dazu werden sie zweckmäßig in den genannten monomeren Verbindungen, die in der Regel Flüssigkeiten darstellen, gelöst. Die Polymerisation kann bei

Raumtemperatur oder erhöhter Temperatur ausgeführt werden. Vorzugsweise erfolgt sie in Gegenwart von an sich bekannten Katalysatoren und/oder Beschleunigern. Als Katalysatoren werden bevorzugt die auf diesem technischen Gebiet bekannten peroxidischen Katalysatoren und als Beschleuniger Metallsalze von Naphthensäuren und dergleichen verwendet. Beim Polymerisieren unter erhöhter Temperatur ist es häufig nicht erforderlich, derartige Katalysatoren und/oder Beschleuniger zu verwenden. Die Aushärtung kann auch durch energiereiche Strahlung, beispielsweise durch Kobalt-60-$\gamma$-Strahlung und/oder Elektronenstrahlung sowie UV-Strahlung beschleunigt werden.

Die gemäß der Erfindung hergestellten Polyester haben den Vorteil, daß sie gelöst in den obengenannten monomeren Verbindungen eine für die Verarbeitung günstige niedrige Viskosität besitzen.

Die durch Umsetzung mit monomeren Verbindungen erhaltenen Endprodukte zeichnen sich durch eine Kombination verschiedener wertvoller Eigenschaften aus. Sie besitzen eine außerordentlich hohe Temperaturbeständigkeit, sind aber andererseits sehr elastisch. Die Schrumpfung ist außerordentlich gering. Ein besonderer Vorteil besteht darin, daß die oxidative Trocknung der Umsetzungsprodukte der Polyester mit den monomeren Verbindungen die Oberflächenbeschaffenheit günstig beeinflußt. Trotz des hohen Gehalts an Ölen besitzen die Endprodukte ausgezeichnete mechanische Eigenschaften einschließlich ausreichender Härte.

Die gemäß der Erfindung hergestellten Polyester können gelöst in den genannten monomeren Verbindungen als Isoliertränk- oder Träufelharz bzw. -lacke eingesetzt werden im Elektromaschinen- und Transformatorenbau, d. h. als Isolierüberzüge für sämtliche Wicklungsarten.

Sie zeigen auch bei lang andauernder Wärmebelastung einen geringen Gewichtsverlust.

Die auszuhärtenden Gemische aus den gemäß der Erfindung hergestellten Polyestern und den monomeren Verbindungen können auf diesem technischen Gebiet übliche Zusatzstoffe enthalten wie Pigmente, Streckmittel, plastifizierende Komponenten. Ein besonderer Vorteil besteht aber darin, daß plastifizierende Komponenten, die an sich nicht erwünscht sind, aufgrund der hohen elastizitätsverleihenden Eigenschaften der Polyester nicht erforderlich sind.

Vorprodukt für Beispiel 1

In einem Reaktionsgefäß, das mit Thermometer, Rührer und Kondensator ausgestattet ist, werden 2325 g Ricinusöl und 600 g Maleinsäureanhydrid unter Rühren und Überleiten von Inertgas auf 130° C erhitzt und anschließend 2 Stunden bei 130° C gehalten.

Beispiel 1

In einen 2-l-Dreihalskolben, der mit Thermometer, Rührer, Auskreiser und Kondensator ausgerüstet ist, werden 150 g Monoäthanolamin und 100 ml Xylol vorgelegt und portionsweise mit 372 g Tetrahydrophthalsäureanhydrid so versetzt, daß die exotherme Reaktion unter Kontrolle bleibt. Anschließend wird auf 165° C erhitzt und unter Xylol-Umlauf kondensiert bis zur Säurezahl <3. Dann werden 73 g Maleinsäureanhydrid, 819 g Vorprodukt für Beispiel 2 und 60 ml Xylol hinzugefügt und unter Rühren und Xylol-Umlauf auf 185 bis 190° C erhitzt. Bei Erreichen einer Säurezahl von etwa 14 wird die Polykondensation abgebrochen, das Schleppmittel (Xylol) im Vakuum abdestilliert, bei 150° C 230 mg Toluhydrochinon und bei 108° C 545 g Styrol zugesetzt. Die erhaltene styrolische Lösung hat bei einem Festkörper von 70%, eine Viskosität von 690 mPa · s/25° C und eine Säurezahl von 10. Sie kann als Tränkharz eingesetzt werden und ergibt nach dem Aushärten Isolierüberzüge mit ausgezeichneten mechanischen und elektrischen Eigenschaften.

Beispiel 2

Nach derselben Arbeitsweise, wie sie in Beispiel 1 beschrieben wurde, werden 205 g Monoäthanolamin und 120 ml Xylol mit 510 g Tetrahydrophthalsäureanhydrid zur Reaktion gebracht und auf eine Säurezahl von <3 kondensiert. Anschließend werden 119 g Maleinsäureanhydrid, 880 g des Vorproduktes aus Beispiel 2 und 60 ml Xylol zugesetzt und bei 185—190° C auf eine Säurezahl von 17 verestert. Das Schleppmittel (Xylol) wird im Vakuum abdestilliert. Bei 150° C wird mit 120 mg Toluhydrochinon stabilisiert und bei 104° C mit 810 g Styrol verdünnt. Die erhaltene styrolische Lösung hat einen Festkörper von 65%, eine Viskosität von 250 mPa · s/25° C und eine Säurezahl von 12. Sie kann als Tränkharz eingesetzt werden und ergibt nach dem Aushärten Isolierüberzüge mit ausgezeichneten mechanischen und elektrischen Eigenschaften.

**Patentansprüche für die Vertragsstaaten: BE, CH, FR, GB, IT, LU, NL, SE**

1. Verfahren zur Herstellung von ungesättigten, Imidgruppen enthaltenden Polyestern durch Umsetzung von Imidgruppen enthaltenden Verbindungen der folgenden Formel

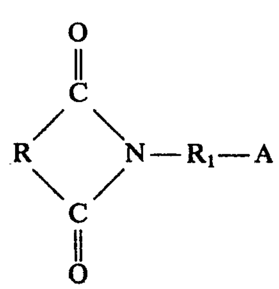

(I)

worin R für einen mono- oder bicyclischen aromatischen oder cycloaliphatischen und/oder einen aliphatischen Rest, der unsubstituiert oder durch Methylgruppen und/oder Halogenatome substituiert ist, steht, an dem die beiden zur Anhydridbildung befähigten Carboxylreste in 1,2- oder 1,3-Stellung stehen, $R_1$ eine einfache aliphatische Gruppe mit 1 bis 10 Kohlenstoffatomen darstellt und A eine Hydroxy- oder Carboxylgruppe bedeutet,
mit ungesättigten und gegebenenfalls zusätzlich gesättigten mehrwertigen Carbonsäuren, oder deren Anhydriden, und Hydroxylgruppen enthaltenden Verbindungen, dadurch gekennzeichnet, daß als Ausgangsprodukt hydroxyfunktionelle ungesättigte Öle in einer Menge von 5 bis 60 Gew.-%, bezogen auf das Gesamtgewicht des Polyesters, eingesetzt werden.

2. Verfahren nach Anspruch 1, dadurch gekennzeichnet, daß als Öle natürliche, hydroxyfunktionelle Öle eingesetzt werden.

3. Verfahren nach einem der Ansprüche 1 oder 2, dadurch gekennzeichnet, daß als Öle Reaktionsprodukte von Polyolen mit 3 bis 6 Hydroxylgruppen und isolierten Fettsäuren eingesetzt werden.

4. Verfahren nach einem oder mehreren der Ansprüche 1 bis 3, dadurch gekennzeichnet, daß als Öle mit Polyolen umgeesterte natürliche ungesättigte Öle eingesetzt werden.

5. Ungesättigte, Imidgruppen enthaltende Polyester, hergestellt nach dem Verfahren von Ansprüchen 1 bis 4.

6. Verwaltung der ungesättigten, Imidgruppen enthaltenden Polyester gemäß Ansprüchen 1 bis 5 zur Herstellung von Mischpolymerisaten durch Polymerisation mit monomeren Vinyl-, Acryloyl-, Methacryloyl und/oder Allyl-Verbindungen.

**Patentansprüche für den Vertragsstaat: AT**

1. Verfahren zur Herstellung von ungesättigten, Imidgruppen enthaltenden Polyestern durch Umsetzung von Imidgruppen enthaltenden Verbindungen der folgenden Formel

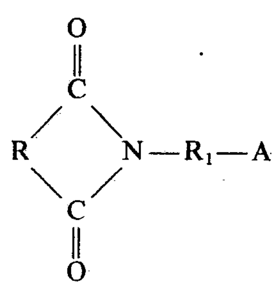

(I)

worin R für einen mono- oder bicyclischen aromatischen oder cycloaliphatischen und/oder einen aliphatischen Rest, der unsubstituiert oder durch Methylgruppen und/oder Halogenatome substituiert ist, steht, an dem die beiden zur Anhydridbildung befähigten Carboxylreste in 1,2- oder 1,3-Stellung stehen, $R_1$ eine einfache aliphatische Gruppe mit 1 bis 10 Kohlenstoffatomen darstellt und A eine Hydroxy- oder Carboxylgruppe bedeutet,
mit ungesättigten und gegebenenfalls zusätzlich gesättigten mehrwertigen Carbonsäuren, oder deren Anhydriden, und Hydroxylgruppen enthaltenden Verbindungen, dadurch gekennzeichnet, daß als Ausgangsprodukt hydroxyfunktionelle ungesättigte Öle in einer Menge von 5 bis 60 Gew.-%, bezogen auf das Gesamtgewicht des Polyesters, eingesetzt werden.

2. Verfahren nach Anspruch 1, dadurch gekennzeichnet, daß als Öle natürliche, hydroxyfunktionelle Öle eingesetzt werden.

3. Verfahren nach einem der Ansprüche 1 oder 2, dadurch gekennzeichnet, daß als Öle Reaktionsprodukte von Polyolen mit 3 bis 6 Hydroxylgruppen und isolierten Fettsäuren eingesetzt werden.

4. Verfahren nach einem oder mehreren der Ansprüche 1 bis 3, dadurch gekennzeichnet, daß als Öle mit Polyolen umgeesterte natürliche ungesättigte Öle eingesetzt werden.

5. Verwendung der ungesättigten, Imidgruppen enthaltenden Polyester gemäß Ansprüchen 1 bis 4 zur Herstellung von Mischpolymerisaten durch Polymerisation mit monomeren Vinyl-, Acryloyl-, Methacryloyl und/oder Allyl-Verbindungen.

**Claims for the Contracting states: BE, CH, FR, GB, IT, LU, IL, NL and SE**

1. A process for the production of unsaturated polyesters which contain imide groups by reacting compounds containing imide groups which correspond to the following formula

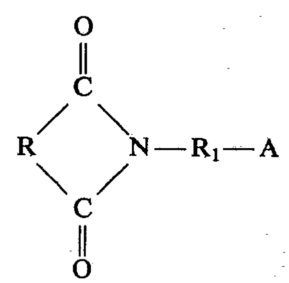

(I)

wherein

R represents a mono- or bicyclic aromatic or cycloaliphatic and/or an aliphatic radical, which may be unsubstituted or substituted by methyl groups and/or halogen atoms, on which both the carboxyl radicals which are capable of forming anhydrides are at the 1,2- or 1,3-position,

$R_1$ represents a simple aliphatic group having from 1 to 10 carbon atoms and

A represents a hydroxy or carboxyl group,

with unsaturated and optionally in addition saturated multibasic carboxylic acids, or the anhydrides thereof and compounds containing hydroxyl groups, characterised in that hydroxy functional unsaturated oils are used as a starting product in a quantity of from 5 to 60%, by weight,

based on the total weight of the polyester.

2. A process according to claim 1, characterised in that natural, hydroxy functional oils are used as oils.

3. A process according to one of claims 1 or 2, characterised in that the reaction products of polyols having from 3 to 6 hydroxyl groups with isolated fatty from 3 to 6 hydroxyl groups with isolated fatty acids are used as oils.

4. A process according to one or more of claims 1 to 3, characterised in that natural unsaturated oils which have been transesterified with polyols are used as oils.

5. An unsaturated polyester containing imide groups which is produced according to the process according to claims 1 to 4.

6. The use of the unsaturated polyester containing imide groups according to claims 1 to 5 for the production of mixed polymers by polymerisation with monomeric vinyl, acryloyl, methacryloyl and/or allyl compounds.

**Claims for the Contracting state: AT**

1. A process for the production of unsaturated polyesters which contain imide groups by reacting compounds which contain imide groups and which correspond to the following formula

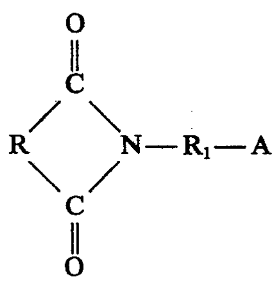

(I)

wherein

R represents a mono- or bicyclic aromatic or cycloaliphatic and/or an aliphatic radical, which may be unsubstituted or substituted by methyl groups and/or halogen atoms, on which both the carboxyl radicals which are capable of forming anhydrides are at the 1,2- or 1,3-position,

$R_1$ represents a simple aliphatic group having from 1 to 10 carbon atoms and

A represents a hydroxy or carboxyl group,

with unsaturated and optionally in addition saturated multibasic carboxylic acids, or the anhydrides thereof and compounds which contain hydroxyl groups, characterised in that hydroxy functional unsaturated oils, are used as a starting product in a quantity of from 5 to 60%, by weight, based on the total weight of the polyester.

2. A process according to claim 1, characterised in that natural hydroxy functional oils are used as oils.

3. A process according to one of claims 1 or 2, characterised in that reaction products of polyols having acids are used as oils.

4. A process according to one or more of claims 1 to 3, characerised in that natural unsaturated oils which have been transesterified with polyols are used as oils.

5. The use of the unsaturated polyester which contains imide groups according to claims 1 to 4 for the production of mixed polymers by polymerisation with monomeric vinyl, acryloyl, methacryloyl and/or allyl compounds.

**Revendications pour les Etats contractants: BE, CH, FR, GB, IT, LU, LT, NL, SF**

1. Procédé de préparation de polyesters insaturés contenant des groupes imide par réaction de composés contenant des groupes imide et répondant à la formule

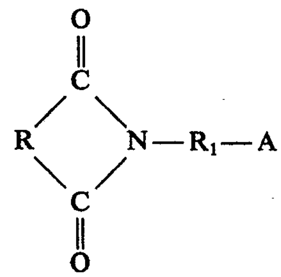

(I)

dans laquelle R représente un reste aromatique ou cycloaliphatique mono- ou bicyclique et/ou un reste aliphatique, qui est non substitué ou substitué par des groupes méthyle et/ou des atomes d'halogènes, sur lequel les deux restes carboxyle capables de former un anhydride sont en positions 1,2 ou 1,3, $R_1$ représente un groupe aliphatique simple en C 1—C 10 et A un groupe hydroxy ou carboxy,
avec des acides carboxyliques polyvalents insaturés accompagnés éventuellement d'acides carboxyliques polyvalents saturés, ou leurs anhydrides, et des composés contenant des groupes hydroxy, caractérisé en ce que l'on utilise en tant que produit de départ des huiles insaturées à fonctions hydroxy en quantité de 5 à 60% du poids total du polyester.

2. Procédé selon la revendication 1, caractérisé en ce que l'on utilise en tant qu'huiles des huiles naturelles à fonctions hydroxy.

3. Procédé selon l'une des revendications 1 ou 2, caractérisé en ce que l'on utilise comme huiles des produits de réaction de polyols contenant 3 à 6 groupes hydroxy et d'acides gras isolés.

4. Procédé selon une ou plusieurs des revendications 1 à 3, caractérisé en ce que l'on utilise comme huiles des huiles naturelles insaturées transestérifiées par des polyols.

5. Polyesters insaturés contenant des groupes imide préparés par le procédé des revendications 1 à 4.

6. Utilisation des polyesters insaturés contenant des groupes imide selon les revendications

1 à 5, pour la préparation de copolymères par polymérisation avec des composés monomères vinyliques, acryloyliques, méthacryloyliques et/ou allyliques.

**Revendications pour l'État contractant: AT**

1. Procédé de préparation de polyesters insaturés contenant des groupes imide par réaction de composés contenant des groupes imide et répondant à la formule

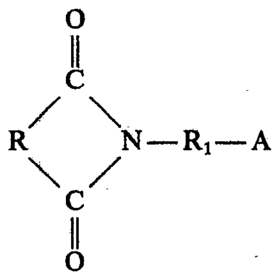

(I)

dans laquelle R représente un reste aromatique ou cycloaliphatique mono- ou bicyclique et/ou un reste aliphatique, qui est non substitué ou substitué par des groupes méthyle et/ou des atomes d'halogènes, sur lequel les deux restes carboxyle capables de former un anhydride sont en positions 1,2 ou 1,3, $R_1$ représente un groupe aliphatique simple en C 1— C 10 et A un groupe hydroxy ou carboxy,
avec des acides carboxyliques polyvalents insaturés accompagnés éventuellement d'acides carboxyliques polyvalents saturés, ou leurs anhydrides, et des composés contenant des groupes hydroxy, caractérisé en ce que l'on utilise en tant que produit de départ des huiles insaturées à fonctions hydroxy en quantité de 5 à 60% du poids total du polyester.

2. Procédé selon la revendication 1, caractérisé en ce que l'on utilise en tant qu'huiles des huiles naturelles à fonctions hydroxy.

3. Procédé selon l'une des revendications 1 ou 2, caractérisé en ce que l'on utilise comme huiles des produits de réaction de polyols contenant 3 à 6 groupes hydroxy et d'acides gras isolés.

4. Procéde selon une ou plusieurs des revendications 1 à 3, caractérisé en ce que l'on utilise comme huiles naturelles insaturées transestérifiées par des polyols.

5. Utilisation des polyesters insaturés contenant des groupes imide selon les revendications 1 à 4, pour la préparation de copolymères par polymérisation avec des composés monomères vinyliques, acryloyliques, méthacryloyliques et/ou allyliques.